## Europäisches Patentamt

## European Patent Office

## Office européen des brevets

(11) Veröffentlichungsnummer: **0 254 126**
**A2**

(19)

(12) # EUROPÄISCHE PATENTANMELDUNG

(21) Anmeldenummer: 87109815.8

(51) Int. Cl.⁴: **H02B 1/18**

(22) Anmeldetag: 07.07.87

(30) Priorität: 24.07.86 DE 3625039

(43) Veröffentlichungstag der Anmeldung:
27.01.88 Patentblatt 88/04

(84) Benannte Vertragsstaaten:
**BE CH DE FR GB LI SE**

(71) Anmelder: **Siemens Aktiengesellschaft Berlin
und München**
**Wittelsbacherplatz 2**
**D-8000 München 2(DE)**

(72) Erfinder: **Scholtholt, Hans**
**Tannenstrasse 4**
**D-8044 Lohhof(DE)**
Erfinder: **Steiner, Ewald**
**Fichtenweg 11**
**D-8137 Berg 3(DE)**

(54) **Steckbaugruppe mit Sicherungen für Verteiler.**

(57) Die Baugruppe (1) dient dem elektrischen Überlastungsschutz der Teilnehmerschaltungen der Vermittlungsanlage. Die Sicherungen (6) sind als 3-Elektroden-Ableiter ausgebildet und in Längsrichtung der Baugruppe (1) hintereinanderliegend angeordnet. Sie sind zwischen jeweils zwei Kontaktteilen (3) stirnseitig eingeklemmt. Die Kontaktteile (3) stehen mit jeweils einem Adernpaar der Teilnehmerleitung in Verbindung. Mit mittlerer Pol (7) der Sicherung (6) ist von einem Erdkontakt (10) umklammert, der aus einem Erdungsblech (4) herausgebogen ist. Dieses ist mit der Gestellerde des Schichtverteilers verbunden.

FIG 1

EP 0 254 126 A2

## Steckbaugruppe mit Sicherungen für Verteiler

Die Erfindung bezieht sich auf eine steckbare, flache Baugruppe, mit als Überspannungsableiter ausgebildeten Sicherungen für Schichtverteiler von Telekommunikation-, insbesondere Fernsprechvermittlungsanlagen. Eine derartige Baugruppe ist z.B. durch die DE-PS 2738851 bekannt geworden. Danach weist die leistenförmige Baugruppe eine Vielzahl von in einem Trägerteil teilweise eingebetteten, quer zur Längsrichtung verlaufenden Kontaktteilen auf, an deren inneren Enden die Überspannungsableiter federnd anliegen und deren andere Enden Steckkontaktstellen für Gegenkontakte eines Schichtbausteins des Schichtverteilers bilden. Die zweipoligen Überspannungsableiter stehen mit ihrer Mittelachse senkrecht zu der Erstreckungsebene der Baugruppe. Ein u-förmig um die Baugruppe gebogenes Erdungsblech ist mit Erdungszungen versehen, die sich federnd gegen den anderen Pol des Überspannungsableiters drücken, der somit mit seinem anderen Pol gegen das Kontaktteil gedrückt wird. Ein derartiger Aufbau eignet sich nicht für die Verwendung von 3-Elektroden-Ableitern, da diese für die übereinandergeschichteten Baugruppen zu hoch sind.

Durch die Unterlagen des deutschen Gebrauchsmusters 820943 ist eine mit dreipoligen Ableitern versehene Baugruppe bekannt geworden, bei der die liegend angeordneten Ableiter mit Anschlußdrähten versehen sind, die mit den Kontaktteilen durch Löten verbunden sind. Das Auswechseln und Ersetzen defekter Ableiter ist demgemäß sehr zeitaufwendig.

Der Erfindung liegt die Aufgabe zugrunde, daß Einsetzen und Austauschen von dreipoligen Überspannungsableitern zu erleichtern und zu beschleunigen.

Diese Aufgabe wird durch die Erfindung gemäß Anspruch 1 gelöst. Es können nun Sicherungen ohne Anschlußdrähte verwendet werden. Dies ist bereits mit einer Kostenersparnis verbunden. Die Überspannungsableiter werden nun einfach zwischen die Blattfedern und die Erdkontakte eingeschoben. Das Bestücken und Auswechseln läßt sich somit sicher und schnell bewerkstelligen. Durch die liegende Anordnung überschreitet die Baugruppe nicht ihre zulässige Bauhöhe. Die Erdungskontakte klemmen die Sicherungen ein und halten sie somit in ihrer Funktionslage.

Vorteilhafte Weiterbildungen der Erfindung sind in den Ansprüchen 2 bis 5 gekennzeichnet:

Durch die Weiterbildung nach Anspruch 2 sind sämtliche Erdkontakte in einem Teil zusammengefasst. Sie lassen sich daher billiger herstellen und montieren.

Die Weiterbildung nach Anspruch 3 ergibt einen doppelten Erdungskontakt. Die Sicherung kann senkrecht zur Baugruppenebene zwischen diese Erdungskontakte eingeschoben werden.

Die Anordnung nach Anspruch 4 ermöglicht die Verwendung der Schmelzringe. Diese aus Lot bestehenden Ringe erwärmen sich beim Auftreten von länger anhaltenden Überströmen so stark, daß sie schmelzen. In diesem Zustand legen sich die Enden der Blattfedern an die Kurzschlußfinger an, so daß eine Überlastung und Schädigung des jeweiligen Überspannungsableiters vermieden wird.

Durch die Weiterbildung nach Anspruch 5 entstehen an den Blattfedern definierte enge Kontaktstellen, an denen der Einfluß von Verunreinigungen gering bleibt.

Im folgenden wird die Erfindng anhand eines in der Zeichnung dargestellten Ausführungsbeispieles näher erläutert:

FIG 1 zeigt eine steckbare Baugruppe mit Sicherungen für einen Fernsprechverteiler,

FIG 2 einen Schnitt entlang der Linie II-II in FIG 1.

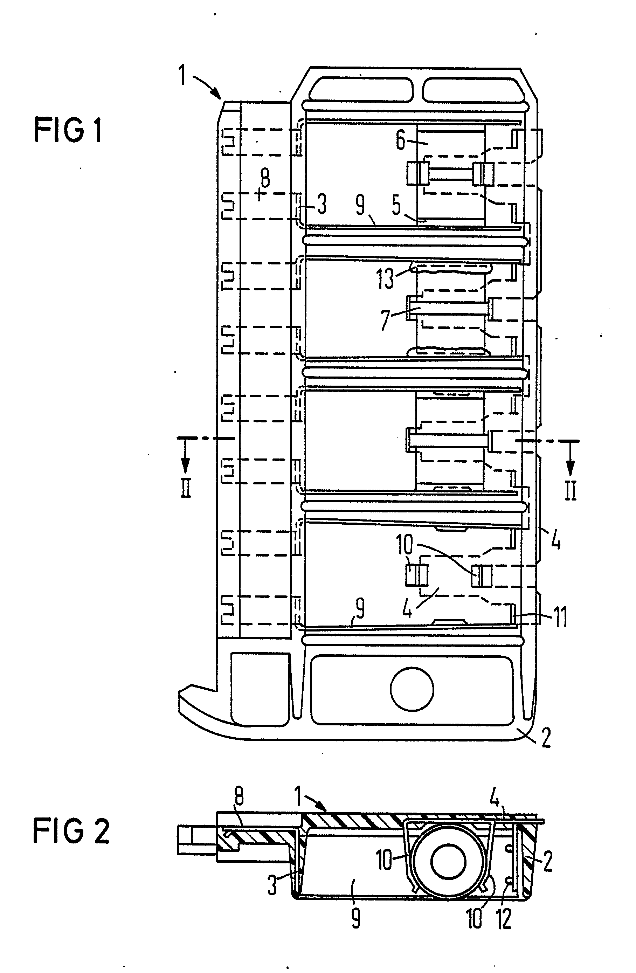

Nach den FIG 1 und 2 besteht eine steckbare, flache Baugruppe 1 für Schichtverteiler in Fernsprechvermittlungsanlagen aus einem Kunststoffträgerteil 2, Kontaktteilen 3, einem Erdungsblech 4, Schmelzringen 5 und im wesentlichen zylindrischen Sicherungen 6. Die Sicherungen 6 sind als 3-Elektroden-Überspannungsableiter ausgebildet, bei denen zwei Pole stirnseitig und ein dritter Pol 7 ringförmig in der Mitte angeordnet ist. Die Kontaktteile 3 erstrecken sich im wesentlichen senkrecht zur Längsrichtung der leistenförmigen Baugruppe 1. Sie sind teilweise in dem Trägerteil 2 eingebettet und bilden entlang einer der Längskanten Steckkontaktstellen 8 für entsprechende Gegenkontakte eines Schichbausteines des Schichtverteilers. Diese Gegenkontakte sind mit den Adernpaaren der daran angeschlossenen Teilnehmerleitungen verbunden. Die Kotaktteile 3 bilden mit ihrem anderen Ende Blattfedern 9, die frei in das Innere des Trägerteils 2 hineinragen.

Die in Längsrichtung der Baugruppe 1 hintereinanderliegend angeordneten Sicherungen 6 sind in jeweils einer Aufnahmekammer angeordnet. Jeweils zwei benachbarte Kontaktteile 3 erstrecken sich mit ihren Blattfedern 9 entlang der Seitenwände der Aufnahmekammern. Sie sind jeweils einem Andernpaar einer Teilnehmerleitung zugeordnet und mit ihren freien Enden gegeneinander federnd vorgespannt. An die Sicherungen 6 sind stirnseitg die Schmelzringe 5 angelegt, an die sich die Blattfedern 9 andrücken. Das Erdungsblech 4 ist größtenteils flachliegend in dem Trägerteil 2 eingebettet. Im Bereich der mittleren Pole 7 der Sicherungen 6 sind aus dem Erdungsblech 4 Erdkontakte 10 paarweise herausgebogen, die den mittleren Pol 7 der Metallfedern umklammern. Die Blattfedern 9 sind über die Sicherungen 6 hinaus verlängert, so daß sie in die Nähe von Kurzschlußfingern 11 gelangen, die ebenfalls aus dem Erdungsblech 4 senkrechtrecht abstehend herausgebogen sind. In diesem Bereich weisen die Blattfedern 9 sickenartige Erhebungen 12 auf, die genau definierte Kontaktstellen zur Anlage an den Kurzschlußfingern 11 bilden.

Treten bei einer der Teilnehmerleitungen längere Überströme auf, so erhitzt sich der Schmelzring 5 und schmilzt zu der mit 13 bezeichneten Form. Dadruch kann sich die Blattfeder 9 in Richtung der Sicherung 6 so lange bewegen, bis die sickenartigen Erhebungen 12 an den Kurzschlußfingern 11 anliegen. Der auftretende Überstrom wird dadurch direkt auf das Erdungsblech 4 geleitet, das seinerseits mit der Schutzerde des Gestells verbunden ist. Dieser Erdungskontakt bleibt auch dann erhalten, wenn die Sicherung 6 zum Zwecke des Austauschs der Schmelzringe 5 entfernt wird.

## Ansprüche

1. Steckbare, flache Baugruppe (1) mit als Überspannungsableitern ausgebildeten Sicherungen (6) für Schichtverteiler von Telekomminikations-, insbesondere Fernsprechvermittlungslanlagen, wobei die leistenförmige Baugruppe (1) eine Vielzahl von in einem Trägerteil teilweise eingebetteten, quer zur Längsrichtung verlaufenden Kontaktteilen (3) aufweist, an deren inneren Enden die Sicherungen (6) federnd anliegen und deren andere Enden Steckkontaktstellen (8) für Gegenkontakte eines Schichtbausteins des Schichtverteilers bilden,
**dadurch gekennzeichnet,**
daß die als 3-Elektroden-Ableiter ausgebildeten Sicherungen (6) in der Längsrichtung hintereinanderliegend angeordnet sind, daß die Kontaktteile (3) im Bereich des ersten Endes als Blattfedern (9) ausgebildet sind, die an den Stirnseiten der Sicherungen (6) mittelbar oder unmittelbar anliegen, daß jeweils eine Sicherung (6) zwischen zwei benachbarten, einem Andernpaar einer Teilnehmerleitung zugeordneten, gegeneinander federnden Blattfedern (9) gehalten ist, zwischen denen jeweils ein dem ringförmigen mittleren Pol (7) der Sicherung (6) einklemmender Erdkontakt (10) vorgesehen ist.

2. Baugruppe nach Anspruch 1,
**dadurch gekennzeichnet,**
daß die Erdkontakte (10) Teile eines gemeinesamen Erdungsbleches (4) sind, das in der Ebene der Baugruppe (1) liegend angeordnet ist und dessen Erdkontakte (10) aus dieser Ebene herausgebogen sind.

3. Baugruppe nach Anspruch 3,
**dadurch gekennzeichnet,**
daß jeder Erdkontakt (10) aus zwei gegeneinander federnden Zungen besteht, die den mittleren Pol der Sicherung (6) umgreifen.

4. Steckbaugruppe nach Anspruch 2 oder 3,
**dadurch gekennzeichnet,**
daß zwischen den Stirnseiten der Sicherungen (6) und den Blattfedern (9) Schmelzringe (5) gehalten sind, daß die Enden der Blattfedern (9) über die Stirnseiten der Sicherungen (6) hinausragen, daß in diesem Bereich aus dem Erdungsblech Kurzschlußfinger (11) mit Abstand zu den Enden der Blattfedern (9) herausgebogen sind und daß bei einem geschmolzenen Schmelzring (13) die Blattfeder (9) an dem Kurzschlußfinger (11) anliegt.

5. Baugruppe nach Anspruch 4,
**dadurch gekennzeichnet,**
daß die Blattfedern (9) an den Berührungsstellen zu den Kurzschlußfingern (11) mit sickenartigen Erhebungen (12) versehen sind.

FIG 1

FIG 2